# EUROPÄISCHE PATENTSCHRIFT

(11) **EP 1 300 270 B1**
(45) Veröffentlichungstag und Bekanntmachung des Hinweises auf die Patenterteilung: **10.11.2004**
(21) Anmeldenummer: 02020620.7
(22) Anmeldetag: 13.09.2002
(51) Int. Cl.: B60J 1/20, E06B 9/36

(54) **Lamelle und daraus aufgebauter Lamellenvorhang**
Lamellar blind and corresponding lamella
Rideau de lamelles et lamelle correspondante

(30) Priorität: 08.10.2001 DE 10149449
(43) Veröffentlichungstag der Anmeldung: 09.04.2003
(73) Patentinhaber: BOS GmbH & Co. KG, 73760 Ostfildern (DE)
(72) Erfinder: Hintennach, Markus, 73666 Baltmannsweiler (DE); Reppin, Reno, 13156 Berlin (DE)
(74) Vertreter: Patentanwälte Rüger, Barthelt & Abel

(56) Entgegenhaltungen:
- WO-A-00/63517
- DE-C- 4 337 311
- FR-A- 2 671 314
- US-A- 3 789 905
- US-A- 4 993 469

## Beschreibung

Die Erfindung bezieht sich auf eine lamelle für einen lamellenvorhang oder ein lamellenrollo gemäß Anspruch 1, und auf ein entsprechenden lamellenvorhang oder -rollo gemäß Anspruch 25.

Eine lamelle bzw. ein lamellenrollo welches das nächstliegenden Stand der Technik darstellt ist in DE 4337311C offenbart.

Die DE 35 05 143 beschreibt einen Raffvorhang für Kraftfahrzeugfenster, die eine von der Rechteckform abweichende Gestalt haben. Zu der Anordnung gehören zwei Führungsschienen, die längs der langen Fensterkanten nebeneinander verlaufen und deren Abstand sich zu einem Ende des Fensters hin verändert. In jeder der Führungsschienen laufen Gleiter, die mit dem Vorhang verbunden sind.

Der Zuschnitt des Vorhangs ist so gewählt, dass er in der ausgestreckten Form das Fenster überdeckt. Konsequenterweise sind bei gerafftem Vorhang diejenigen Teile des Vorhangs zu lang, die bei geschlossenem Vorhang an der breiteren Stelle des Fenster zu liegen kommen. Es ergibt sich ein unschönes sackartiges Aussehen in der Vorhangbahn im gerafften Zustand.

Die WO 00/63517 beschreibt einen Lamellenvorhang für Fenster an Gebäuden. Die Lamellen sind an Gleitern aufgehängt, die in einer oberen Führungsschiene laufen. Von hier aus hängen die Lamellen frei nach unten. An ihrer unteren Kante sind sie durch Kugelketten miteinander verbunden, um eine gewisse Stabilisierung zu erreichen. Jeder Gleiter enthält ein Winkelgetriebe, mit deren Hilfe die Winkelstellung der Lamellen relativ zur Fensterebene verändert werden kann, um den Lichteinfall zu regulieren.

Zusätzlich zu dieser Verstellmöglichkeit sind die Lamellen auch in Längsrichtung veränderbar. Hierzu enthalten die Gleiter Seilrollen auf die Zugschnüre aufwickelbar sind, die durch die Drehachse hindurchführen, an denen die Lamellen aufgehängt sind.

Ein Lamellenvorhang für nicht rechteckige Fenster von Kraftfahrzeugen ist aus der DE 43 37 311 C1 bekannt. Die einzelnen Lamellen bestehen aus Textilstreifen, die in der Länge dehnbar sind. Hierdurch soll die jeweilige Lamelle an die Breite des Fensters angepasst sein, und zwar an jener Stelle, an der sich die Lamelle jeweils befindet.

Beim Strecken der Lamellen tritt allerdings eine Querkontraktion ein, die zu einer nicht erwünschten Gestaltsänderung führt.

Ausgehend hiervon ist es Aufgabe der Erfindung eine Lamelle zu schaffen, die sich zum Aufbau eines Lamellenvorhangs oder -rollos eignet, der an einem Fenster eines Kraftfahrzeugs angebracht werden kann, wobei die Gestalt des Fensters von der einfachen rechteckigen Gestalt abweicht.

Außerdem ist es Aufgabe der Erfindung, einen Lamellenvorhang oder -rollo für Kraftfahrzeugfenster zu schaffen.

Diese Aufgaben werden erfindungsgemäß durch die Lamelle mit den Merkmalen des Anspruches 1 und den Lamellenvorhang oder -rollo mit den Merkmalen des Anspruches 25 gelöst.

Die erfindungsgemäße Lamelle setzt sich aus zwei Lamellenteilen zusammen, die in Längsrichtung gegeneinander verstellbar sind. Jeweils ein Stirnende von jedem Lamellenabschnitt bildet gleichzeitig auch das Stirnende der Lamelle. Durch eine Vorspanneinrichtung werden die Lamellen gegeneinander vorgespannt. Mit Hilfe der Vorspanneinrichtung soll ein Klappern der Teile gegeneinander und in den betreffenden Führungsschienen verhindert werden. Ohne eine solche Vorspannkraft würden die Lamellen in sich und ihre Führungsteile zum klappern neigen, wenn das Fahrzeug in Gebrauch ist.

In Fahrzeugen verwendete Lamellen müssen eine gewisse Steifigkeit aufweisen, damit sie durch die Fahrzeugerschütterungen nicht in unliebsame Schwingungen geraten. Vorteilhafterweise ist dazu der erste Lamellenteil zumindest ein Stück weit über seine Länge mit einem I-Profil versehen.

Um die Lamelle im Fahrzeug zu befestigen, ist das betreffende Stirnende mit einer Verbindungseinrichtung versehen. Die Verbindungseinrichtung kann Rastglieder aufweisen, damit die Lamelle im Schadensfall leicht auszuwechseln ist. Außerdem vereinfacht die Rasteinrichtung die Montage der Lamelle beim Einbau eines Lamellenvorhangs- oder -rollos wesentlich.

Wenn das zweite Lamellenteil in Gestalt eines Rohres ausgeführt ist, derart, dass die beiden Lamellenteile teleskopisch ineinander verschiebbar sind, ergibt sich ein sehr angenehmes äußeres Erscheinungsbild. Dabei erfolgt der Einbau der Lamelle zweckmäßigerweise so, dass die Öffnung der außen übergreifende Lamelle nach unten zeigt. Es können keine Teile in den Spalt zwischen den beiden Lamellenteilen hineinfallen.

Um ein harmonisches Zusammenwirken der Lamellen mit der Fensterkontur zu geben, kann zumindest ein Stirnende der Lamelle an den Verlauf der betreffenden Fensterkante an jener Stelle angepasst sein, die die Lamelle bei geschlossenem Lamellenvorhang oder -rollo einnimmt.

Eine recht universelle Gestalt wird erreicht, wenn die Lamelle bei einer Ansicht auf ihre Flachseite an dem einen Stirnende halbkreisförmig gekrümmt ist. Die halbkreisförmige Gestalt hat insbesondere bei geöffnetem Lamellenvorhang oder -rollo Vorteile, weil die ins Wageninnere vorstehende oberere Kante angenehm verrundet ist.

Die Vorspanneinrichtung ist zweckmäßigerweise unsichtbar im Inneren der Lamelle untergebracht. Der hierfür geeignete Hohlraum ist beispielsweise die rohrförmige Gestalt des zweiten Lamellenteils. Der Hohlraum wird durch einen Deckel verschlossen, so dass ohne weiteres die Montage der Vorspanneinrichtung möglich ist. Der Hub zum Einsetzen des Deckels in den Hohlraum ist ausreichend kurz, um ein Überdehnen der Vorspanneinrichtung zu verhindern.

Der Deckel zum Verschließen des Hohlraums kann ein Abschlussdeckel sein, mit dem der rohrförmige Lamellenteil an einem Stirnende verschlossen ist.

Die Wiederlagereinrichtung für die Vorspanneinrichtung ist vorteilhafterweise unmittelbar am Deckel vorgesehen. Sie besteht im einfachsten Falle aus einem Stift. Eine ähnlich Wiederlagereinrichtung kann am innen liegenden Ende des anderen Lamellenteils ausgebildet sein.

Die Vorspanneinrichtung spannt zweckmäßiger Weise die Lamelle in Richtung auf ihre kürzeste Längserstreckung vor. Dies verhindert ein Auseinanderfallen der Lamelle im nicht eingebauten Zustand. Sie wird vor der Montage leichter handhabbar. Ein Druckglied wäre zwar ebenfalls denkbar und würde die Montage der Lamelle an sich erleichtern, hätte aber Nachteile hinsichtlich der Handhabung der nicht eingebauten Lamellen.

Außerdem kann als Vorspanneinrichtung ein einfacher Gummiring Verwendung finden, wenn die Lamelle auf Zug in Richtung auf ihre kürzestes Längserstreckung vorgespannt ist.

Eine der Befestigungseinrichtungen für die Lamelle besteht in einer schlüssellochartigen Öffnung. Hierdurch wird sehr leicht der Ein- und Ausbau gestaltet. Dabei kann die schlüssellochförmige Öffnung an ihrer Rückseite im engeren Bereich mit einer Vertiefung versehen sein, so dass sich im Zusammenwirken mit der Vorspanneinrichtung eine Verrastung ergibt.

Die Lamellenteile bestehen zweckmäßigerweise aus Kunststoff beispielsweise einem Thermoplasten.

Der erfindungsgemäße Lamellenvorhang bzw. das erfindungsgemäße Lamellenrollo weist zwei nebeneinander verlaufende Führungsschienen auf, die der Kontur der jeweiligen Fensterkante folgen. Auf diese Weise wird jede Lamelle an beiden Stirnenende zwangsläufig geführt. Sie wird wirksam an einem Pendeln infolge von Zentrifugalkräften oder sonstigen Beschleunigungskräften behindert. Außerdem können die Lamellen nicht aneinander schlagen.

Die Lamellen, die in den Führungsschienen geführt sind, sind in der Länge verstellbar. Es eigenen sich hierfür insbesondere Lamellen, die wie oben ausgeführt gestaltet sind.

Um den Lamellenvorhang beziehungsweise das Lamellenrollo zu öffnen, ist eine Koppeleinrichtung vorhanden, die eine jeweilige Lamelle mit ihren Nachbarn verbindet. Auf diese Weise braucht nur jene Lamelle angetrieben zu werden, die beim Öffnen oder Schließen den längsten Weg zurücklegt. Die nicht angetriebenen Lamellen werden über die Koppeleinrichtung beim Schließen mitgeschleppt, während sie beim Öffnen durch die jeweils benachbarte bereits in Bewegung befindliche Lamelle mitgenommen werden.

In jeder Führungsschiene sitzt zweckmäßigerweise für jede Lamelle ein eigener Gleiter mit einem aus der Führungsschiene herausragenden Zapfen. An dem Zapfen ist die Lamelle zu verankern.

Wenn der Zapfen von der Lamelle trennbar ist, können die Gleiter, jeder für sich montiert werden, während die Lamellen erst nachträglich eingesetzt werden. Dies kommt einer Vereinfachung der Montage wesentlich entgegen.

Da bei Lamellenvorhängen der Vorteil darin besteht, dass die Lamellen verschwenkt werden können, um den Lichteintritt zu regulieren, ist vorzugsweise einer der Zapfen und zwar nur einer der Zapfen jeder lamelle drehfest mit der jeweiligen Lamelle verbunden. Eine solche drehfeste Verbindung lässt sich erreichen, wenn der Zapfen die Gestalt eines Hammers hat und der Kopf in eine entsprechende Öffnung der Lamelle eingreift. Der andere Zapfen jeder lamelle dagegen ist rotationssymmetrisch. Die Lamelle kann sich auf dem Zapfen drehen. Auf diese Weise wird eine Zwangssynchronisation der Zapfen an beiden Enden einer Lamelle überflüssig.

Um denjenigen Gleiter zu bewegen, der den größten Hub beim Öffnen oder Schließen zurücklegt, kann der Gleiter mit einer durchgehenden Gewindebohrung versehen sein, durch eine Schraubspindel hindurch führt. Eine solche Anordnung ist sehr platzsparend.

Das Drehen der Zapfen lässt sich sehr einfach mit einem kleinen Winkelgetriebe bewerkstelligen, das im Inneren des Gleiters untergebracht ist. Das Winkelgetriebe ist zweckemäßigerweise ein Schneckengetriebe, wobei das Schneckenrad eine Durchgangsöffnung mit Polygonprofil enthält. Mit Hilfe einer Polygonwelle, die durch alle Schnecken hindurch läuft, können die Lamellen synchron verstellt werden.

Die Koppeleinrichtung, die dazu dient, beim Öffnen die nicht angetriebenen Lamellen mit zu schleppen, ist im einfachsten Falle ein gelochtes Band. Der Abstand der Löcher entspricht dem Abstand der Lamellen im geöffneten Zustand. Mit Hilfe des Bandes kann gleichzeitig die untere Führungsschiene abgedeckt werden, womit keine Gefahr besteht, dass Fremdkörper in die Führungsschiene fallen und den Betrieb des Lamellenvorhangs oder Rollos beeinträchtigen können.

Zweckmäßigerweise ist das als Koppeleinrichtung dienende Band verlängert und schleppt einen ungelochten Abschnitt mit, der bei geöffnetem Lamellenvorhang oder Rollo seinerseits die Führungsnut in der Führungsschiene abdeckt. Bei Nichtgebrauch kann der überschüssige Teil des Bandes mit Hilfe eines Federmotors auf einer Wickelwelle aufgewickelt werden.

In der Zeichnung ist ein Ausführungsbeispiel des Gegenstands der Erfindung dargestellt. Es zeigen:
- Fig. 1: die erfindungsgemäße Lamelle in einer perspektivischen Seitenansicht,
- Fig. 2: die Lamelle nach Figur 1 bei abgenommene rohrförmigen Lamellenteil,
- Fig. 3: die Lamelle nach Figur 1, teilweise aufgebrochen bei angehobenem Deckel,
- Fig. 4: ein Kraftfahrzeugfenster mit einem erfindungsgemäßen Lamellenvorhang im geschlossenen Zustand in einer perspektivischen Ansicht vom Innenraum des Fahrzeugs her,
- Fig. 5: den Blick in den Innenraum des Fahrzeugs, ähnlich Figur 4 jedoch bei geöffnetem Lamellenvorhang,
- Fig. 6: die mit dem Lamellenvorhang versehene Tür, bei abgenommener Innenverkleidung,
- Fig. 7: die untere Führungsschiene mit den entsprechenden Zubehörteilen in einer perspektivischen vereinfachten Darstellung und teilweise aufgebrochen,
- Fig. 8: einen der mit dem Winkelgetriebe versehenen Gleiter, in einer geöffneten Ansicht und
- Fig. 9: eine Detailansicht des oberen Endes einer Lamelle zusammen mit dem zugehörigen Gleiter.

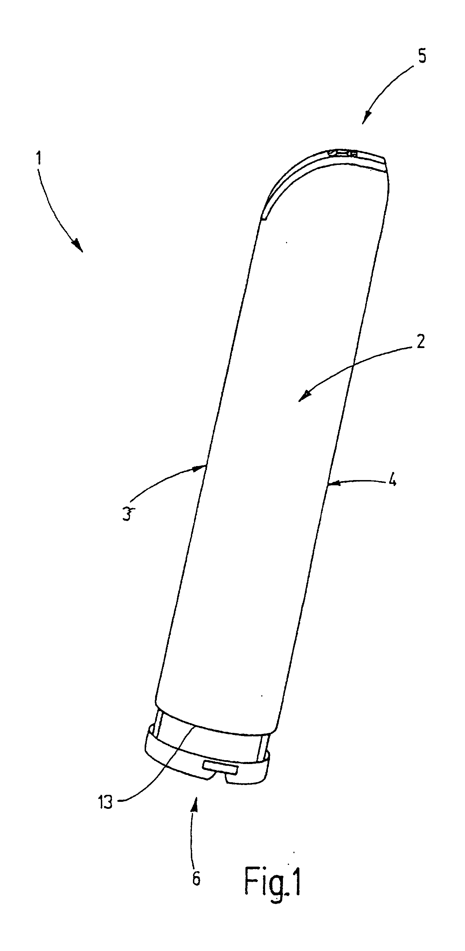

Figur 1 zeigt eine erfindungsgemäße Lamelle 1, die in einem Zustand veranschaulicht ist, in dem sie nahezu ihre geringste Länge einnimmt. Die Lamelle 1 hat in der Draufsicht auf ihre Flachseite 2 eine im Wesentlichen längliche rechteckige Gestalt und wird von zwei langen geraden Kanten 3, 4 begrenzt. An der Kante 3 läuft die Lamelle 1 ungefähr spitz zu, während sie an der anderen Kante 4 stumpf ausgebildet ist. Sie wird nach oben von einer oberen Stirnseite 5 und nach unten von einer unteren Stirnseite 6 begrenzt. Beide Stirnseiten 5, 6 sind an das Querschnittsprofil des in Figur 1 sichtbaren Teils der Lamelle 1 angepasst, das heißt sie sind mit dem Querschnittsprofil deckungsgleich.

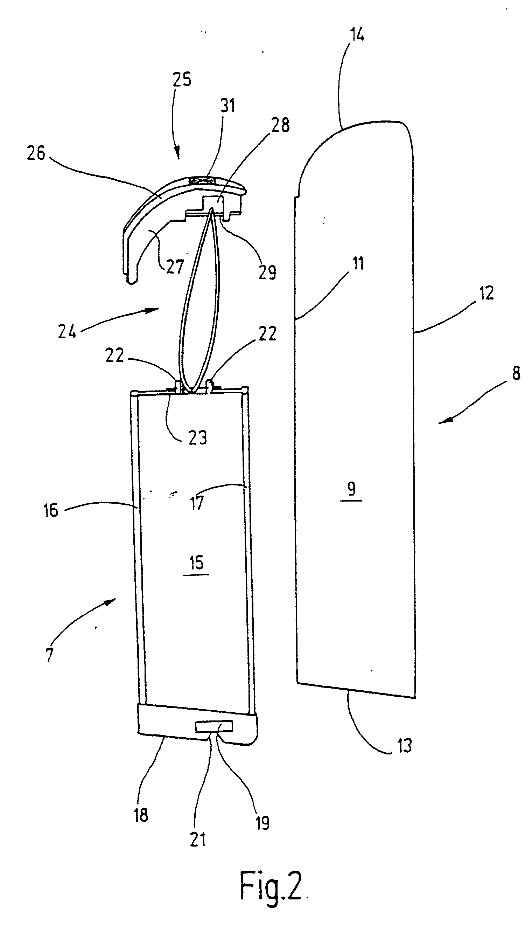

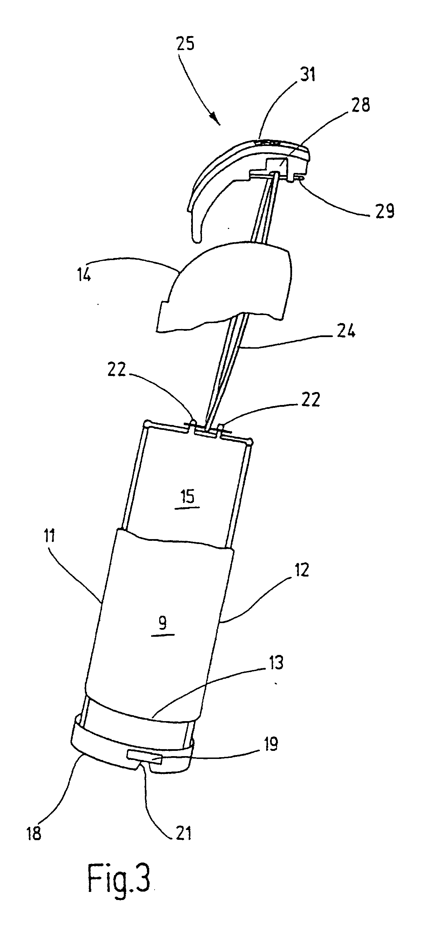

Den inneren Aufbau zeigen die Figuren 2 und 3.

Die Lamelle setzt sich im Wesentlichen aus einem unteren Lamellenteil 7 und einem oberen Lamellenteil 8 zusammen. Der obere Lamellenteil 8 ist rohrförmig und begrenzt einen Innenraum, in den der untere Lamellenteil 7 teleskopartig einschiebbar ist. Der Lamellenteil 8 hat in seinem Inneren einen durchgehend konstanten Querschnitt und ist an beiden Enden offen. Die Außenkontur seines Querschnitts hat die bereits oben erwähnte Gestalt, wodurch eine Flachseite 9 und zwei gerade Längskanten 11 und 12 entstehen. Am unteren Ende weist die Draufsicht eine gerade Stirnkante 13 auf, die nicht rechtwinklig zu den beiden Längskanten 11 und 12 verläuft. Am oberen Ende hingegen läuft der obere Lamellenteil 8 an einem Stirnende 14 aus, das in der Seitenansicht gesehen den gezeigten viertelkreisförmigen Verlauf hat.

Der untere Lamellenteil 7 besteht im Wesentlichen aus einer länglichen rechteckigen Platte 15, die an beiden Rändern durch Stege 16 und 17 verstärkt ist, so dass im Querschnitt gesehen der untere Lamellenteil einen im Querschnitt gesehen I-Profil hat. Mit seinem unteren Ende steckt der plattenförmige Teil 15 in einem Bodenstück 18 das eine T-Nut 19 enthält, die sich in Richtung auf lediglich eine der Flachseiten 2 der Lamelle 1 öffnet. Die andere Seite der T-Nut 19 ist geschlossen. Ihr Nutenschlitz 21 zeigt nach unten.

Im Inneren des Lamellenteils 8 sind Führungen für die Stege 16 und 17 vorhanden. Der plattenförmige Bereich 15 zusammen mit den beiden Stegen 16 und 17 des unteren Lamellenteils 7, ist so bemessen, dass er mit geringem Spiel jedoch klemmfrei in dem Inneren des rohrförmigen oberen Lamellenteils 9 längsverschieblich ist.

Am oberen Ende trägt die Platte 15 zwei Fortsätze 22, die ein kurzes Stück voneinander beabstandet sind. Durch entsprechende Öffnungen in den Fortsätzen 22 führt ein Stift 23.

Um die beiden Lamellenteile 7 und 8 in Richtung auf die verkürzte Stellung der Lamelle 1 vorzuspannen, ist eine Vorspanneinrichtung in Gestalt eines Gummirings 24 vorgesehen. Der Gummiring 24 führt einerseits um den bereits erwähnten Stift 23 herum und ist andererseits an einem Deckel 25 verankert, der in dem oberen Stirnende 14 des oberen Lamellenteils 9 steckt. Der Deckel 25 setzt sich aus einer profilierten gekrümmten Leiste 26 zusammen und einem Steg 27. Im montierten Zustand liegt die Leiste 26 auf der Stirnseite 24 auf, wie dies Figur 1 erkennen lässt, während der Steg 27 den Deckel 25 im Inneren des oberen Lamellenteils 9 zentriert und fixiert.

Der Steg 27 enthält eine Aussparung 28, die sich nach unten zu öffnet und durch deren Maul quer ein Widerlagerstift 29 verläuft. Der Stift 29 dient als zweite Verankerungsstelle für den Gummiring 24.

Schließlich enthält die Leiste 26 in ihrer Oberseite noch eine taschenförmige Ausnehmung, die von außen über eine schlüssellochförmige Öffnung 31 zugänglich ist. Die schlüssellochförmige Öffnung 31 fluchtet an einem Ende mit dem Schlitz 21 der T-Nut 19, das heißt eine Verbindungsgerade durch dieses Ende der schlüssellochförmigen Öffnung 31 und den Schlitz 21 liegt parallel zu der Längsachse der Lamelle 1.

Mit der Ausnahme der Stifte 23 und 29 besteht die Lamelle 1 vorzugsweise vollständig aus Kunststoff.

Die Montage der Lamelle 1 sieht etwa wie folgt aus:

Auf den teilweise eingesteckten Stift 23 wird der O-Ring 24 aufgefädelt. Sodann wird der Stift 23 vorgeschoben, bist er in beiden Fortsätzen 22 reibschlüssig und unverrückbar verankert ist. Das so vorbereitete untere Lamellenteil 7 wird mit dem Gummiring 24 voraus von dem Stirnende 13 her in den oberen Lamellenteil 8 eingesteckt. Mit einem Werkzeug wird der Gummiring 24 erfasst und über das Stirnende 14 herausgezogen. Der Gummiring kann jetzt in einer ähnlichen Weise auf den Stift 29 verankert werden. Anschließend wird der Deckel 25 mit seinem Steg lagerichtig in das Stirnende 14 des oberen Lamellenteils 8 eingesteckt. Die Montage ist damit abgeschlossen.

Die beiden Lamellenteile 7 und 8 lassen sich gegen die Wirkung des Gummirings 24 teleskopartig auseinander ziehen. Der Gummiring 24 spannt, wie erwähnt, die beiden Lamellenteile 7 und 8 in die kurze Stellung der Lamelle 1 vor.

Im verkürzten Zustand werden die Längskanten 3 und 4 der Lamelle 1 von den Längskanten 11 und 12 des oberen Lamellenteils 8 gebildet, während die Flachseite 9 die Flachseite 2 der Lamelle 1 darstellt. Im mehr oder weniger ausgezogenen Zustand wird die Flachseite 2 der Lamelle 1 zusätzlich durch die aus der unteren Stirnseite 13 herausragende Flachseite der Platte 15 und die seitlichen Stege 16, 17 gebildet. Letztere bilden auch unterhalb des oberen Lamellenteils 8 Abschnitte der Längskanten 3 und 4 der Lamelle 1.

Die Länge der Platte 15 in Längsrichtung der Lamelle 1 ist so bemessen, dass auch in der längsten Auszugsstellung die betriebsmäßig vorkommt, noch eine klemmfreie teleskopartige Führung in dem oberen Lamellenteil 8 gewährleistet ist.

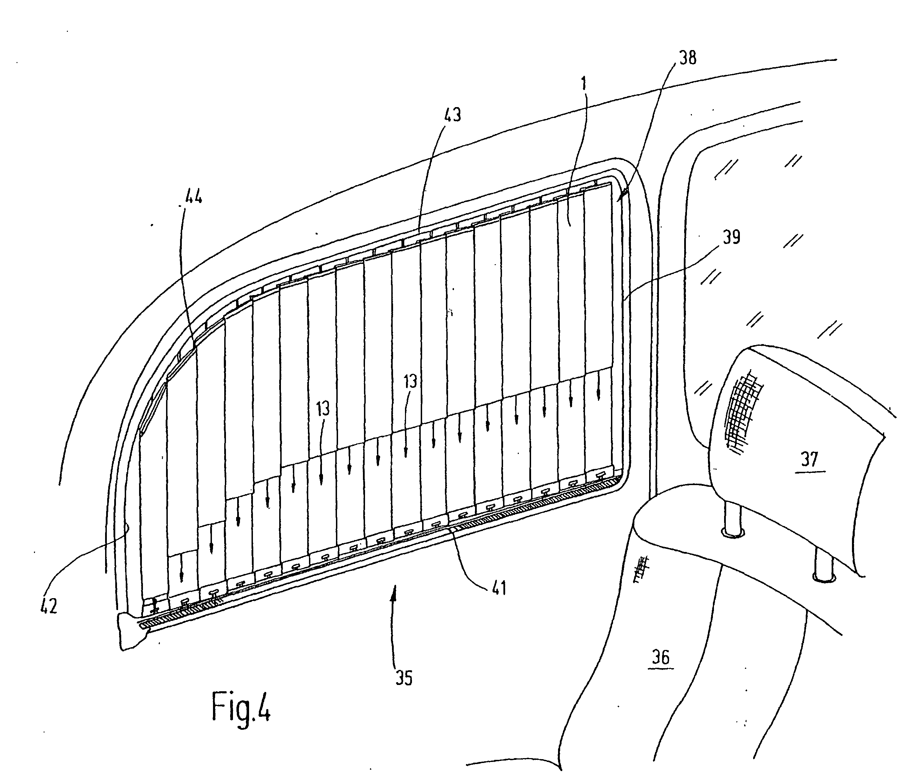

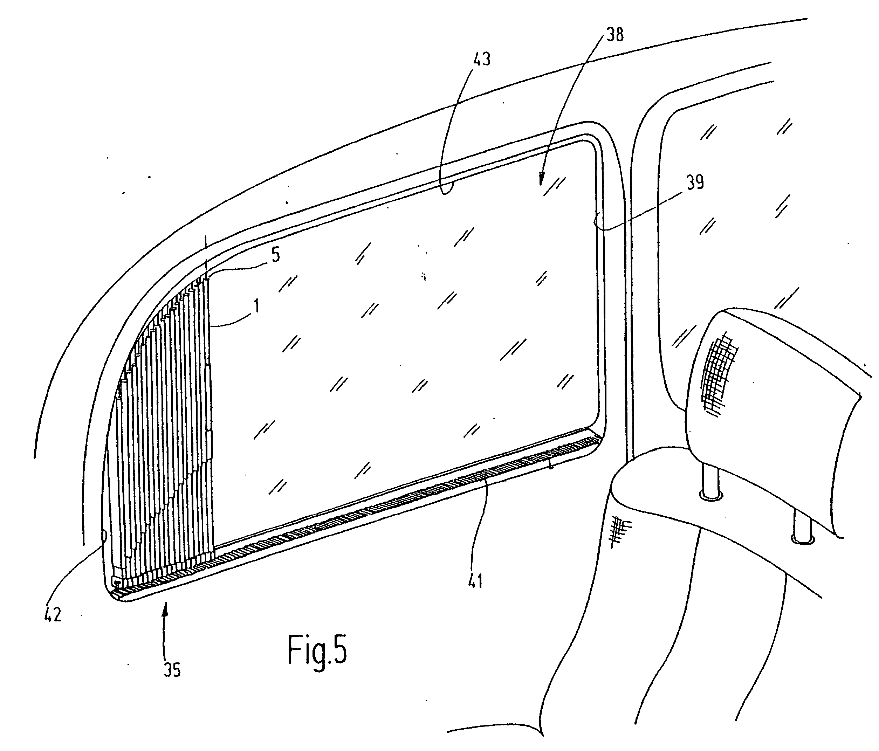

Mit der in den Figuren 1 - 3 gezeigten Lamelle kann ein Lamellenvorhang 35 aufgebaut werden, wie er in den Figuren 4 und 5 in einer schematisierten perspektivischen Darstellung im geschlossenen bzw. geöffneten Zustand gezeigt ist.

Die Figuren 4 und 5 zeigen einen Blick in den Innenraum eines Pkw. Sie lassen eine Sitzrücklehne 36 mit darauf befestigter Kopfstütze 37 erkennen. Die Sitzrücklehne 36 befindet sich neben einem Seitenfenster 38, mit einer von der Rechteckform abweichenden Gestalt. Das Seitenfenster 38 wird von einer Hinterkante 39, einer geraden Unterkante 41, einer gekrümmten Vorderkante 42 und einer Oberkante 43 begrenzt, die über ein Bogenstück 44 ineinander übergehen. Die beiden Kanten 41 und 43 brauchen nicht parallel zueinander zu verlaufen.

Im geschlossenen Zustand des Lamellenvorhangs 35 liegen die Lamellen 1 einander ein Stück weit an den Längskanten 3 und 4 überdeckend nebeneinander, so dass das gesamte Fenster 38 im Wesentlichen überdeckt ist. Ihre Flachseiten 2 zeigen allesamt zum Fahrzeuginneren hin. Entsprechend dem Abstand von der Oberkante 43 zu der Unterkante 41 ist jede Lamelle 1 mehr oder weniger stark auseinander gezogen, wie dies die Lage der unteren Stirnseite 13 erkennen lässt. Die obere Stirnseite 14 und der Deckel 25 sind etwa dem Verlauf der oberen Fensterkante 43 an derjenigen Stelle angepasst, an der die Lamelle 1 bei geschlossenem Lamellenvorhang 35 steht. Es ist jedoch auch denkbar, alle Lamellen gleich auszubilden und zwar mit einer oberen Stirnseite, wie sie in Figur 1 gezeigt ist.

Der geöffnete Zustand ist in Figur 5 zu erkennen. Die Lamellen 1 liegen mit ihren einander benachbarten Flachseiten 2 aufeinander und sind entsprechend zu einem Paket zusammengeschoben.

Bei der Darstellung ist zu beachten, dass sie stark schematisiert ist.

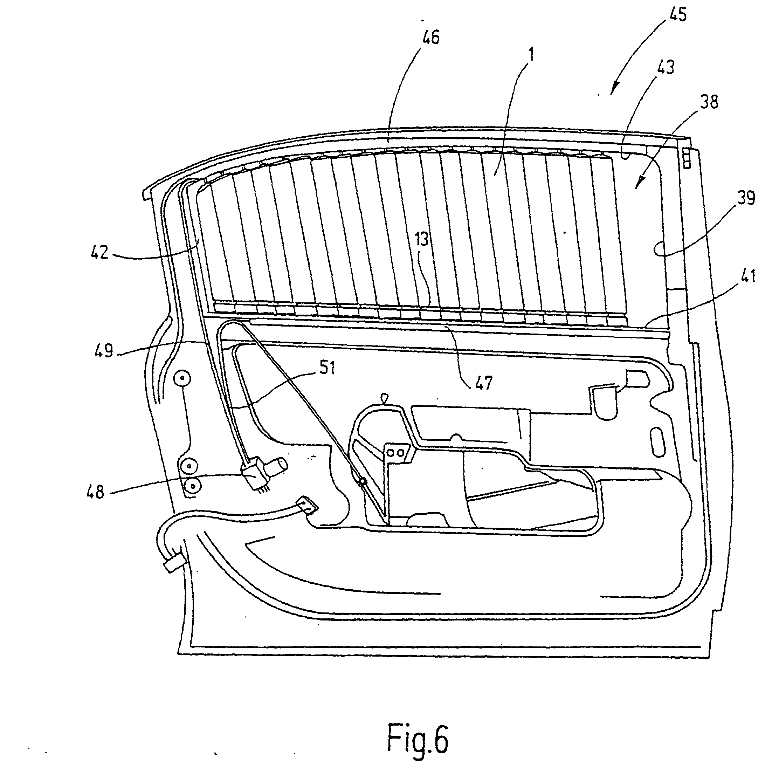

Die Art und Weise wie die Lamellen 1 gehalten, geführt und bewegt werden, wird anhand der Figuren 6 - 9 erläutert.

Figur 6 zeigt ein weiteres Beispiel für die Anwendung des Lamellenvorhangs 35 eine Tür 45 einer großen Limousine. Die Tür 45 enthält das bereits beschriebene Fenster 38 das von den Fensterkanten 39, 41, 42 und 44 begrenzt ist. Die Fensterkante 42 ist hierbei gerade jedoch schräg gegenüber der Fensterkante 39, während die Fensteroberkante 43 in dem der Fensterkante 42 benachbarten Bereich relativ stark gekrümmt ist. Neben der oberen und der unteren Fensterkante 41 und 43 verläuft jeweils eine Führungsschiene 46 und 47, zwischen denen die Lamellen 1 geführt sind. Eine in dem Inneren der Tür 45 angebrachte Antriebseinrichtung 48 ist über Führungsrohre 49 und 51 mit den Führungsschienen 46 und 47 verbunden. In den Führungsrohren 49 und 51 werden biegsame Wellen geführt, wie dies weiter unten noch erläutert wird.

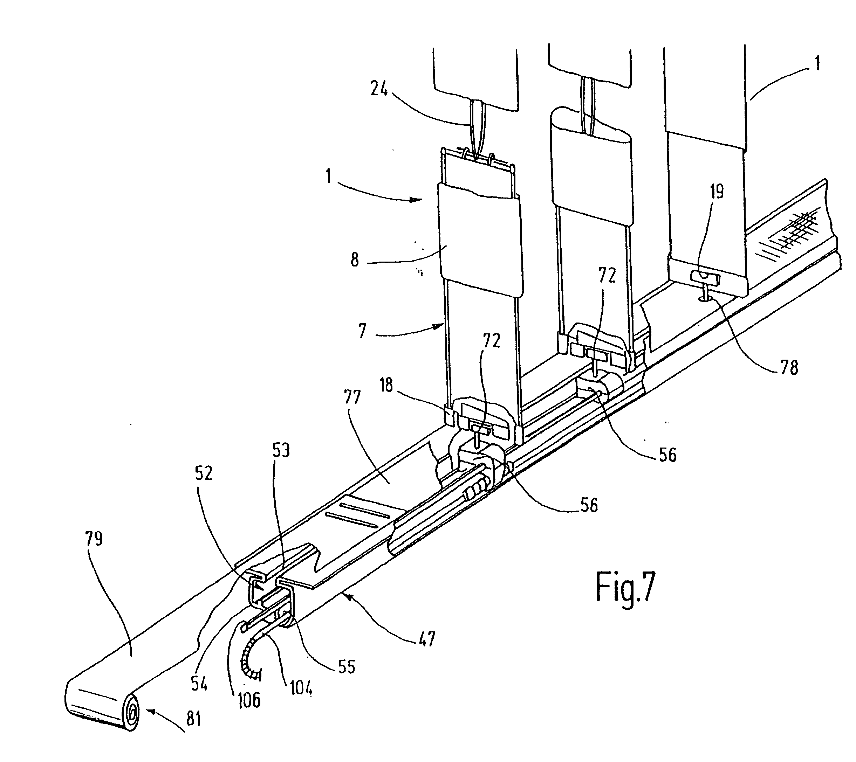

Figur 7 zeigt in einer perspektivischen Darstellung die untere Führungsschiene 47 in Verbindung mit einigen Lamellen 1. Die Führungsschiene 47 besteht beispielsweise aus einem Blechformteil und weist einen in Längsrichtung durchlaufenden T-nutförmigen Kanal 52 auf, der sich nach oben an einem Schlitz 53 öffnet. Der Schlitz 53 hat, wie bei T-Nuten üblich, eine geringere Weite als der darunter befindliche Teil. Gegenüber dem Schlitz 53 wird der Kanal von einem Boden 54 begrenzt, der gegebenenfalls noch eine Führungsleiste trägt und der wie gezeigt neben einer Seite eine Nut 55 enthält, die über die Länge des Kanals 52 durchläuft.

Im Inneren des Kanals 52 laufen mehrere Gleiter 56, und zwar ist pro Lammelle 1 ein Gleiter 56 vorgesehen.

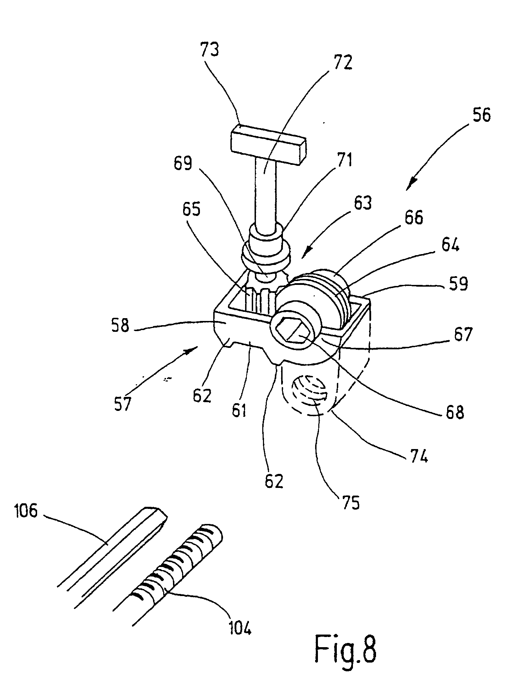

Figur 8 veranschaulicht in einer perspektivischen Darstellung die Gleiter 56. Wie zu ersehen ist, stellt der Gleiter 56 ein Getriebegehäuse dar, dessen untere Gehäusehälfte 57 in Figur 8 zu erkennen ist. Die obere Gehäusehälfte ist, um das Innere erkennen zu lassen, nicht dargestellt. Sie ist sich spiegelbildlich zu der Gehäusehälfte 57 zu denken.

Der Gleiter 56 wird von zwei zueinander parallelen Seitenwänden 58 und 59 begrenzt, die rechtwinklig zu der Längserstreckung des Kanals 52 liegen. Außerdem weisen die Gehäusehälften 57 eine Unterseite 61 auf, aus der Rippen 62 vorstehen, mit denen der Gleiter 56 auf dem Boden 54 läuft. Die Rippen 62 können gleichzeitig der achsparallelen Führung dienen, indem sie mit korrespondierenden Rippen auf dem Boden 54 zusammenwirken.

Im Inneren des Gleiters 56 befindet sich ein Winkelgetriebe 63, bestehend aus einer Schnecke 64 und einem Schneckenrad 65. Die Schnecke 64 weist beidseits zylindrische Fortsätze 66 auf, mit denen sie in miteinander fluchtenden Bohrungen 67 in der Gehäuseseite 58 und Gehäuseseite 59 drehbar gelagert ist. Außerdem enthält die Schnecke 64 eine zu der Schneckenachse koaxiale Durchgangsöffnung 68 mit Sechskantprofil. Das Schneckenrad 65 ist rechtwinklig zu der Drehachse der Schnecke 64 gelagert, und zwar nicht erkennbaren Bohrungen, die sich einerseits in dem Boden 61 und andererseits in einer Oberwand des Gleiters 56 befinden. Diese nicht dargestellte obere Wand ist Teil der nur in Fig. 7 zu erkennenden oberen Gehäusehälfte. Drehfest mit dem Schneckenrad 65 ist eine Welle 69, mit der über eine Muffe 71 ein hammerförmiger Mitnehmer 72 mit einem quaderförmigen Kopf 73 drehfest verbunden ist.

Der hammerförmige Mitnehmer 72 dient der drehfesten Kopplung des Schneckenrades 65 mit der zugehörigen Lamelle 1. Hierzu wird der quaderförmige Kopf 73 in die T-nutförmige Öffnung 19 eingesetzt und dort über nicht weiter veranschaulichte Rastnasen verrastet.

Im montierten Zustand sind die Gleiter 56, wie Figur 7 erkennen lässt, praktisch allseitig geschlossen, wobei aus dem Gehäuse lediglich die Achse 69 nach oben durch den Schlitze 53 hervorsteht.

Lediglich einer der Gleiter 56 ist an seiner unteren Gehäusehälfte 57 mit einem nach unten vorstehenden Fortsatz 74 versehen, der in Figur 8 gestrichelt gezeigt ist. Der Fortsatz 74 läuft bei montiertem Gleiter 56 in der Nut 55. Er enthält eine durchgehende Gewindebohrung 75, die zu der Achse der Schnecke 64 parallel liegt.

Auf der Oberseite der Führungsschiene 47 liegt ein Abdeckband 77, das in Abständen mit Löchern 78 versehen ist.

Durch je ei Loch 78 tritt der Schaft des Mitnehmers 72 aus.

Pro Lamelle 1 ist jeweils ein Loch 78 vorgesehen. Der Abstand zwischen benachbarten Löchern 78 entspricht dem Abstand, den die Lamellen 1 bei geschlossenem Lamellenvorhang haben.

Zu derjenigen Seite hin, zu der sich die führende Lamelle 1 beim Schließen bewegt, ist das Band 77 durch ein weiteres Band 79 verlängert, das bei Bedarf aufgewickelt werden kann, wie dies bei 81 schematisch angedeutet ist.

Das Band 77 wirkt sowohl als Abdeckband für den Schlitz 53 um ein Eindringen von Fremdkörpern in den Kanal 52 zu verhindern, als auch als Koppelmittel, um die Bewegung der führenden Lamelle 1, die beim Öffnen und Schließen den größten Weg zurücklegt, auf die übrigen Lamellen zu übertragen, wenn der Lamellenvorhang 35 geschlossen, das heißt in die Stellung nach den Figuren 6 bzw. 4 gebracht wird.

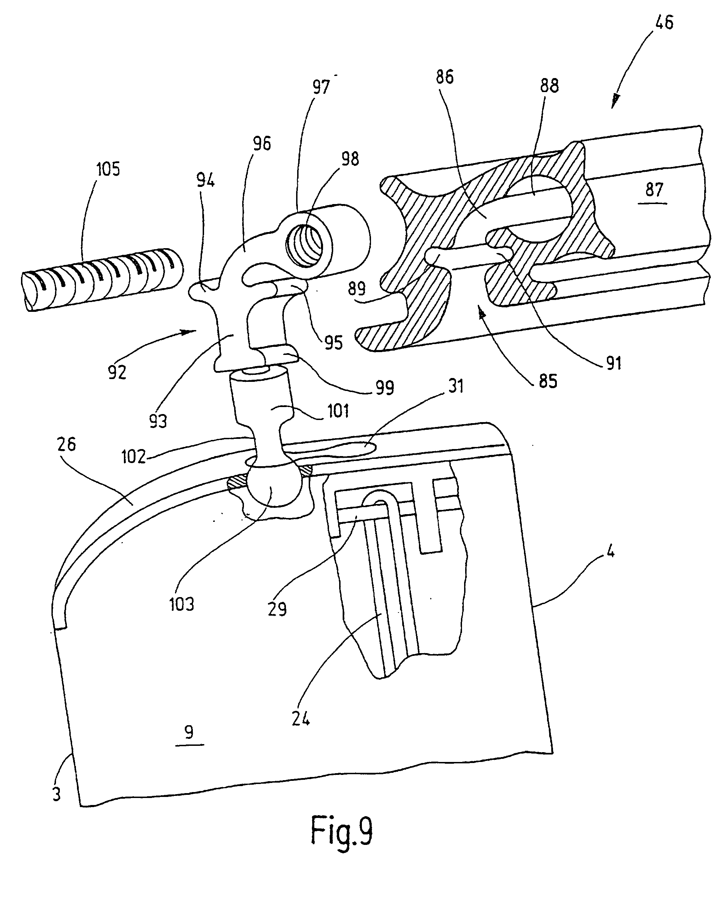

Die obere Führungsschiene 46 ist in Figur 9 ausschnittsweise veranschaulicht. Die obere Führungsschiene 46 enthält eine nach unten zu offene Führungsnut 85, die zunächst etwa parallelflankig ist. Bei 86 biegt die Führungsnut zu einer Schmalseite 87 der Führungsschiene um und mündet in einen zylindrischen Abschnitt 88.

Der zylindrische Abschnitt 88 liegt bezogen auf eine Vertikalebene, die durch den geraden nach unten sich öffnenden Nutenteil geht, seitlich daneben. Sie ist somit in Richtung auf die Schmalseite 87 verschoben.

Zwischen der nach unten zeigenden Öffnung der Nut 85 und dem Boden 86 enthält die Nut 85 zwei seitliche kleinere Nuten 89 und 91, die bezogen auf das Querschnittsprofil der Nut 85 etwa rechtwinklig wegstehen. In der Nut 85 laufen wiederum Gleiter, wobei in Figur 9 ein Gleiter 92 veranschaulicht ist, der mit jener Lamelle 1 gekoppelt ist, die beim Öffnen und Schließen den größten Weg zurücklegt.

Der Gleiter 92 weist einen plattenförmigen Halsteil 93 auf, der sich an seinem oberen Ende tulpenartig in zwei seitliche Arme 94 und 95 aufteilt. Die Arme 94 und 95 laufen in den Nuten 89 und 91 während der Halsteil 93 durch die Nut 85 unterhalb dieser beiden Nuten 85 und 91 hindurchführt.

In Verlängerung des Halsteils 93 geht der Gleiter 92 in einen Bogen 96 über, der am freien Ende einen zylinderförmigen Kopf 97 trägt. Der zylinderförmige Kopf 97 ist mit einer durchgehenden Gewindebohrung 98 versehen.

Wie die Figur 9 unschwer erkennen lässt, läuft der Bogen 96 in der Führungsschiene 46 in dem bogenförmigen Abschnitt 96 der Nut 85, während der zylinderförmige Kopf 97 in dem zylindrischen Abschnitt 88 Platz findet.

Die Achse der Gewindebohrung 98 ist selbstverständlich parallel zu der Längsachse der Nut 87.

Am unteren Ende trägt der Halsteil 93 eine Abschlussplatte 99, an der ein Zapfen 101 angeformt ist, der in gerader Richtung den Halsteil 93 verlängert. Der Zapfen 101 ist bei 102 tailliert und lässt einen kugelförmigen Kopf 103 entstehen. Der kugelförmige Kopf 103 ist so bemessen, dass er in den größeren Teil der schlüssellochförmigen Öffnung 31 eingesteckt und sodann zur Seite bewegt werden kann. Am anderen Ende ist die schlüssellochförmige Öffnung 31 an Unter- oder Rückseite mit einer trichterförmigen Einsenkung versehen, in der der kugelförmige Kopf 103 verrasten kann.

Aufgrund der Längsvorspannung in der Lamelle 1 bleibt der Kopf 103 in jedem Falle verrastet.

Lediglich derjenige Gleiter 92 der beim Öffnen und Schließen unmittelbar angetriebenen Lamelle ist mit dem Bogen 96 und dem zylinderförmigen Kopf 97 versehen. Bei allen übrigen Gleitern fehlt dieser Teil. Um dennoch die Bewegung auf die übrigen Gleiter auch zu übertragen ist ein Koppelband vorgesehen, das dem Koppelband 77 entspricht und das über die zylindrischen Zapfen 101 gestreift ist.

Um die Lamellen 1 im Sinne des Öffnen und Schließen anzutreiben, läuft durch die Nut 55 eine Gewindespindel 104, die durch das Führungsrohr 49 mit dem Antrieb 48 verbunden ist. Die Gewindespindel 104 führt durch die Gewindebohrung 57, des einzigen damit ausgerüsteten Gleiters 56.

Das obere Ende der Lamellen 1 ist ebenfalls angetrieben, wozu eine Gewindespindel 105 vorhanden ist. Die Gewindespindel 105 befindet sich in dem zylindrischen Abschnitt 88 der Nut 85. Sie ist durch die Gewindebohrung 98 des betreffenden Gleiters 92 hindurch geschraubt.

Auch sie ist, falls sie hinreichend flexibel ist, unmittelbar durch das Führungsrohr 51 bis zu dem Antriebsmotor 48 verlängert, oder sie geht an einer entsprechenden Stelle in eine biegsame Welle über, so dass sie von dem Motor 48 drehangetrieben werden kann.

Um die Lamellen 1 im geschlossenen Zustand um die Hochachse drehen zu können, ist schließlich eine Profilwelle 106 vorhanden, die durch die Sechskantöffnungen 68 der Schnecken 64 sämtliche untere Gleiter 56 hindurchführt. Auch sie mit einem Motor gekoppelt, um eine automatische Zwangssteuerung zu gewährleisten. Der Motor zum Antreiben der Profilwelle 106 ist nicht gezeigt.

Die Funktionsweise des gezeigten Lamellenvorhangs ist wie folgt:

Im geöffneten Zustand stehen sämtliche Lamellen 1 in einem Paket neben einer seitlichen Fensterkante. Dabei liegen die Lamellen 1 mit ihren Flachseiten 2 unmittelbar aufeinander.

Für die weitere Funktionserläuterung wird angenommen, dass die Lamellen 1 neben der Fensterkante 42 stehen und somit an dem schmaleren Ende des Fenster 38 nach den Figuren 4 und 5.

Sie werden beim Schließen des Lamellenvorhangs in der nachstehend beschriebenen Weise in die Länge gezogen.

Über den freiliegenden Teil der unteren Führungsschiene 47 ist das Band 79 gezogen, während das Koppelband 77 zwischen den einzelnen Lamellen 1 nach oben stehende Schlaufen bildet.

Um ausgehend von dieser Ausgangsstellung den Lamellenvorhang zu schließen, wird über einen nicht weiter gezeigten Schalter der Motor 48 eingeschaltet. Er setzt über entsprechende biegsame Wellen, die in den Rohren 49 und 51 verlaufen, die Gewindespindeln 104 und 105 synchron in Gang. Beide Gewindespinedlen 104, 105 haben die selbe Gewindesteigung, so dass sich der gezeigte Gleiter 92 mit der selben Geschwindigkeit längs der oberen Führungsschiene 46 bewegt, wie der untere Gleiter 56, der mit dem Fortsatz 74 versehen ist. Es wird also die sich zwischen diesen beiden Gleitern befindliche Lamelle 1 von der Fensterkante 42 in Richtung auf die Fensterkante 39 bewegen. Dabei laufen beide Enden mit der selben Geschwindigkeit.

Wenn sich die so angetriebene Lamelle 1 entsprechend weit entfernt hat, ist die zwischen dieser Lamelle 1 und der nächsten Lamelle 1 vorhandene Schlaufe des Koppelbandes 77 ausgezogen. Das Koppelband 77 wird wirksam und beginnt die nächste Lamelle 1 mit der führende Lamelle 1 mitzuschleppen. Der gleiche Vorgang spielt sich im Bereich der oberen Führungsschiene 46 an dem dort vorhandenen und aus Übersichtlichkeitsgründen nicht gezeigten Koppelband ab.

Der eben beschriebene Vorgang des Ausziehens der Schlaufen zwischen benachbarten Lamellen 1 in dem Koppelband 77 setzt sich von Lamelle zu Lamelle fort, so dass sich immer mehr Lamellen in Richtung auf die Fensterkante 39 bewegen.

Nach einer entsprechenden Zeit haben sich die betreffenden Gleiter 56 und 92 längs den zugehörigen Gewindespindeln 104 und 105 bis in ihre andere Endlage vorgeschraubt. Diese Stellung ist erreicht, wenn die betreffende Lamelle 1 an der Fensterkante 39 angekommen ist. Ihr Eintreffen kann mit Hilfe von Endschaltern automatisch überwacht werden, um den Antriebsmotor 48 rechtzeitig stillzusetzen, damit es zu keiner Beschädigung der mechanischen Teile kommt.

In dem Maße, in dem sich das Koppelband 77 über der Führungsschiene 47 ausgebreitet hat, wurde das andere Abdeckband 79 auf eine entsprechende Federwelle bei 81 aufgewickelt. Die Führungsschiene 47 wird durch das gestraffte Koppelband 77 abgedeckt. Es liegt flach auf der Oberseite der Führungsschiene 47 auf.

Während die Lamellen aus der Anfangsposition in ihre Endposition laufen, passen sich selbsttätig an dem Abstand zwischen den beiden Führungsschienen 46 und 47 an.

Der Benutzer kann nunmehr durch Einschalten eines weiteren nicht gezeigten Motors die Profilwelle 106 in Gang setzen. Hierdurch werden synchron sämtliche Schnecken 64 in allen Gleitern 56 angetrieben. Über das Winkelgetriebe 63 und den Mitnehmer 73 werden entsprechend die Lamellen geschwenkt, wobei sie sich auf den oberen stillstehenden Zapfen 101 drehen. Die Lamellen können damit in die Stellung nach den Figuren 4 und 6 gebracht werden. Es ist auch jede beliebige Zwischenstellung möglich.

Wenn der Benutzer den Lamellenvorhang 35 wieder öffnen will, wird über eine zentrale Steuerung zunächst geprüft, in welcher Drehposition die Lamellen 1 stehen. Da die Schneckengetriebe selbstsperrend sind, könnte ein Öffnen des Lamellenvorhangs 35 zu Beschädigungen führen, wenn die Lamellen mit ihren Schmalseiten aneinander stoßen. Eine zentrale Steuerung wird deswegen zunächst dafür sorgen, dass durch in Gang setzen der Profilwelle 6 die Lamellen 1 in die Querstellung gebracht werden, in der ihre Flachseiten 2 in Ebenen liegen, die rechtwinklig zu der Ebene verläuft, die durch die Fläche des Fensters 38 definiert ist.

Das Erreichen der Endposition wird wiederum durch Endschalter überwacht, damit rechtzeitig die Profilwelle 6 stillgesetzt werden kann.

Nunmehr werden wiederum jedoch mit dem umgekehrten Drehsinn die Gewindespindel 104 und 105 über den Antriebsmotor 48 angetrieben. Aufgrund ihrer Rotation schrauben sich die mit den Gewindebohrungen 75 und 98 versehenen Gleiter 56 und 92 in Richtung auf die Anfangsstellung. Beim Öffnen nehmen sie nach und nach die zwischen ihnen und der Anfangsstellung befindlichen Lamellen in die Anfangsstellung mit. Das Koppelband 77 richtet sich zwischen benachbarten Lamellen einzeln zu einer Schlaufe auf und das Abdeckband 79 wird hinterher gezogen.

Die Profilwelle 106 bleibt in Ruhe und auf ihr gleiten in Längsrichtung ungehindert, die in den Gleitern 56 befindlichen Schnecken 64.

Wenn die Lamellen 1 beim Schließen des Lamellenvorhangs 35 von der kürzeren Fensterkante zu der längeren seitlichen Fensterkante laufen, muss dafür gesorgt werden, dass die Länge des oberen Lamellenteils 8 eine entsprechende Verkürzung der Lamelle 1 nicht behindert. Wenn alle Lamellen 1 mit einem solchen oberen Lamellenteil 8 gleicher Länge ausgerüstet sind, ergibt sich der in Figur 4 erkennbare Verlauf der Unterkanten 13, der dem Verlauf der oberen Führungsschiene 46 folgt. Falls dieser Verlauf als störend empfunden wird und die Einbauverhältnisse es zulassen, können die Lamellen 1 auch neben der längeren seitlichen Fensterkante geparkt werden, also beispielsweise neben der Fensterkante 39 bei der Ausführung nach Figur 6.

Die oberen Lamellenteile 8 sind hierbei in ihrer Länge so bemessen, dass ihre Unterkanten 13 bei geschlossenem Lamellenvorhang 35 eine gerade oder zu der Fensterkante 41 parallele Linie bilden, wie dies in Figur 6 zu erkennen ist. Der Lamellenvorhang 35 aus Figur 6 wird von der Kante 42 her geöffnet und steht geöffnet neben der Fensterkante 39. Die Lamellen 1 werden bei ihrem Weg in die Ruhe- oder Parkstellung bei geöffnetem Lamellenvorhang 35 entsprechend dem zunehmenden Abstand der beiden Führungsschienen 46 und 47 gestreckt. Die Unterkanten 13 der Lamellenoberteile 8 haben nur in der geöffneten Stellung des Lamellenvorhangs 35 jeweils unterschiedlichen Abstand zu der unteren Führungsschiene 47 beziehungsweise der unteren Fensterbrüstung. Ein derartiger Verlauf wird unter Umständen weniger störend empfunden, weil sich diese gegenüber der Unterkante schräg verlaufende Linie der Unterkanten 13 nicht über die gesamte Fensterbreite sondern nur über ein kurzes Stück erstreckt.

Eine Lamelle für einen Lamellenvorhang besteht aus zwei teleskopartig gegeneinander bewegbare Teilen. Mittels eines Gummizugs werden die Lamellenteile in Richtung auf die gekürzte Stellung der Lamelle vorgespannt.

Ein Lamellenvorhang besteht aus einer Vielzahl selbsttätig längenveränderbarer Lamellen, die an den beiden Enden an Führungsschienen geführt sind. Die Verbindung zwischen der Lamelle und der jeweiligen Führungsschiene wird durch Gleiter bewerkstelligt, wobei die Gleiter an einem Enden der Lamellen mit einem Getriebe versehen sind, um die Winkelstellung der Lamellen zu verändern. Außerdem sind diejenigen Gleiter mit Schraubspindelantrieben versehen, die beim Öffnen und schließen des Lamellenvorhangs den größten Weg zurücklegen.

## Patentansprüche

1. Längliche Lamelle (1) für einen Lammellenvorhang oder ein Lamellenrollo (35) an einem Fahrzeugfenster (38) mit einer von einem Rechteck abweichenden Form,
mit einem ersten länglichen Lamellenteil (7), das eine Längserstreckung aufweist, die größer als die Querstreckung ist, von dem ein Ende (18) ein erstes Stirnende (6) der Lamelle (1) bildet, das mit einer verbindungseinrichtung (19) versehen ist,
mit einem zweiten Lamellenteil (8), das mit dem ersten Lamellenteil (7) formschlüssig verschieblich verbunden ist und von dem ein Ende (14) ein zweites Stirnende (5) der Lamelle (1) bildet, wobei die Verschiebungsrichtung parallel zu der Längserstreckung des ersten Lamellenteils (7) liegt, und
mit einer Vorspanneinrichtung (24), die zwischen den beiden Lamellenteilen (7,8) wirksam ist, um zwischen den beiden Lamellenteilen (7,8) eine Vorspannkraft in einer Richtung parallel zu der Längserstreckung des ersten Lamellenteils (7) zu erteilen.

2. Lamelle nach Anspruch 1, **dadurch gekennzeichnet, dass** der erste Lamellenteil (7) zumindest in einem Stück seiner Länge ein I-Profil aufweist,

3. Lamelle nach Anspruch 1, **dadurch gekennzeichnet, dass** die Verbindungseinrichtung (19) Rastglieder aufweist, die für eine Rastverbindung (19,72) eingerichtet sind.

4. Lamelle nach Anspruch 1, **dadurch gekennzeichnet, dass** der zweite Lamellenteil (8) im Wesentlichen die Gestalt eines Rohres aufweist, in dem der erste Lamellenteil (7) teleskopartig längsverschieblich ist.

5. Lamelle nach Anspruch 1, **dadurch gekennzeichnet, dass** das zweite Lamellenteil (8) in seinem von dem zweiten Stirnende (5) der Lamelle (1) abliegenden Ende (13) abschnittsweise eine Kontur aufweist, an die die Außenkontur eines an das erste Stirnende (6) der Lamelle (1) angrenzenden Abschnitts angepasst ist.

6. Lamelle nach Anspruch 1, **dadurch gekennzeichnet, dass** zumindest ein Stirnende (5,6) der Lamelle (1) an die Kontur des Fensters (38) an jener Stelle angepasst ist, an der sich die betreffende Lamelle (1) bei einem geschlossenen Lamellenvorhang (35) befindet.

7. Lamelle nach Anspruch 1, **dadurch gekennzeichnet, dass** ein Stirnende (5,6) der Lamelle (1) gerade ist.

8. Lamelle nach Anspruch 1, **dadurch gekennzeichnet, dass** ein Stirnende (5,6) der Lamelle (1) in einer Ansicht auf die Flachseite (2) der Lamelle (1) einen zumindest angenähert halbkreisförmigen Verlauf zeigt.

9. Lamelle nach Anspruch 1, **dadurch gekennzeichnet, dass** die Vorspanneinrichtung (24) im Inneren der Lamelle (1) untergebracht ist.

10. Lamelle nach Anspruch 1, **dadurch gekennzeichnet, dass** einer der Lamellenteile (8) einen Hohlraum zur Unterbringung der Vorspanneinrichtung (24) bildet.

11. Lamelle nach Anspruch 10, **dadurch gekennzeichnet, dass** der Hohlraum von dem zweiten Lamellenteil (8) gebildet ist.

12. Lamelle nach Anspruch 10, **dadurch gekennzeichnet, dass** der Hohlraum von einem in Längsrichtung der Lamelle (1) liegenden Deckel (25) verschlossen ist.

13. Lamelle nach Anspruch 12, **dadurch gekennzeichnet, dass** der Deckel (25) das zweite Stirnende (5) der Lamelle (1) bildet.

14. Lamelle nach Anspruch 1, **dadurch gekennzeichnet, dass** der zweite Lamellenteil (8) aus einem rohrförmigen Abschnitt und einem darauf aufgesetzten Deckel (25) besteht.

15. Lamelle nach Anspruch 14, **dadurch gekennzeichnet, dass** der Deckel (25) mit dem rohrförmigen Abschnitt verrastet oder stoffschlüssig verbunden ist.

16. Lamelle nach Anspruch 12 der 14, **dadurch gekennzeichnet, dass** der Deckel (25) ein Widerlager (29) für die Vorspanneinrichtung aufweist,

17. Lamelle nach Anspruch 1, **dadurch gekennzeichnet, dass** der erste Lamellenteil (7) an seinem in dem zweiten Lamellenteil (8) steckenden Ende mit einem Widerlager (23) für die Vorspanneinrichtung (24) versehen ist.

18. Lamelle nach Anspruch 17, **dadurch gekennzeichnet, dass** das Widerlager jeweils aus einem in Bohrungen sitzenden Stift (23,29) gebildet ist.

19. Lamelle nach Anspruch 1, **dadurch gekennzeichnet, dass** die Vorspanneinrichtung (24) die Lamelle (1) in Richtung auf ihre kürzeste Längserstreckung vorspannt.

20. Lamelle nach Anspruch 1, **dadurch gekennzeichnet, dass** die Vorspanneinrichtung (24) von einem Gummiring gebildet ist.

21. Lamelle nach Anspruch 12 oder 14, **dadurch gekennzeichnet, dass** der Deckel (25) eine taschenförmige Öffnung umfasst, die von außen her, über eine schlüssellochförmige Öffnung (31) zugänglich ist.

22. Lamelle nach Anspruch 1, **dadurch gekennzeichnet, dass** der Querschnitt der Lamelle (1) eine ellipsenförmige Gestalt hat, in einer Ebene rechtwinklig zu der Längserstreckung der Lamelle (1).

23. Lamelle nach Anspruch 1, **dadurch gekennzeichnet, dass** der Querschnitt der Lamelle (1) an einem Ende spitz zuläuft und an dem anderen Ende stumpf ist, gesehen in einer Ebene rechtwinklig zu der Längserstreckung der Lamelle (1).

24. Lamelle nach Anspruch 1, **dadurch gekennzeichnet, dass** die Lamellenteile (7,8) aus Kunststoff bestehen.

25. Lamellenrollo anordnung oder -vorhang anordnung (35) für ein Fahrzeugfenster (38) mit einer von einem Rechteck abweichenden Form,
mit zwei nebeneinander verlaufenden Führungsschienen (46,47),
mit wenigstens zwei zwischen den Führungsschienen (46,47) geführten Lamellen (1), die in Richtung quer zu den Führungsschienen (46,47) in der Länge veränderbar sind,
mit einer Antriebseinrichtung (56, 92, 104, 105), die mit wenigstens einer der Lamellen (1) verbunden ist, um die Lamelle (1) längs der Führungsschienen (46,47) zu bewegen,
mit einer Koppeleinrichtung (77), die eine Lamelle (1) mit einer oder beiden benachbarten Lamelle (1) verbindet, und
mit einer Dreheinrichtung (63,106) um die Lamellen (1) winkelmäßig einzustellen,
wobei die Lamellen (1) nach einem oder mehreren der Ansprüche 1 bis 23 ausgeführt sind.

26. Anordnung nach Anspruch 25, **dadurch gekennzeichnet, dass** in jeder Führungsschiene (46,47) für jede Lamelle (1) ein Gleiter (56,92) läuft, der mit einem zapfenförmigen Fortsatz (72,101) versehen ist, der dazu eingerichtet ist, in eine entsprechende Öffnung (19,31) in der Lamelle (1) einzugreifen.

27. Anordnung nach Anspruch 26, **dadurch gekennzeichnet, dass** die Verbindung zwischen dem zapfenförmigen Fortsatz (72,101) und der Lamelle (1) lösbar ist.

28. Anordnung nach Anspruch 27, **dadurch gekennzeichnet, dass** einer der zapfenförmige Fortsätze (101) jeder Lamelle einen kugelförmigen Kopf (103) aufweist.

29. Anordnung nach Anspruch 27, **dadurch gekennzeichnet, dass** einer der zapfenförmigen Fortsätze (72) jeder Lamelle die Form eines Hammers aufweist.

30. Anordnung nach Anspruch 26, **dadurch gekennzeichnet, dass** die Gleiter (56, 92) einer der Lamellen jeweils eine durchgehende Gewindebohrung (75, 98) enthalten, die über das Lichtraumprofil der übrigen Gleiter (56,92) gesehen in Längsrichtung der Führungsschienen (46,47) auskragt.

31. Anordnung nach Anspruch 27, **dadurch gekennzeichnet, dass** der zapfenförmige Fortsatz (72) von einer Gruppe von Gleitern (56) mit einem Winkelgetriebe (63) versehen ist, von dem ein Zahnrad (64) eine Durchgangsöffnung (68) mit einem Polygonprofil enthält, und dass die Durchgangs öffnung (68) parallel zum Bewegungsweg der Lamellen (1) längs den Führungsschienen (46,47) ausgerichtet ist.

32. Anordnung nach Anspruch 31, **dadurch gekennzeichnet, dass** in einer der Führungsschienen (46,47) eine vorzugsweise biegsame Profilwelle (106) verläuft, die drehfest und verschieblich durch die Zahnräder (64) der Winkelgetriebe (63) mit dem Durchgangsloch (68) hindurch verläuft.

33. Anordnung nach Anspruch 30, **dadurch gekennzeichnet, dass** in beiden Führungsschienen (46,47) jeweils eine vorzugsweise flexible Gewindespindel (104,105) verläuft und dass jede der Gewindespindeln (104,105) durch die Gewindebohrungen (75,98) derjenigen Gleiter (56,92) hindurchführt, die beim Öffnen oder Schließen des Lamellenvorhangs oder - rollos (35) den größten Weg zurücklegen.

34. Anordnung nach Anspruch 26, **dadurch gekennzeichnet, dass** die Koppeleinrichtung (77) zwischen den Lamellen (1) von wenigstens einem Band gebildet ist, das mit äquidistant verteilten Löchern (78) versehen ist, durch die die zapfenförmigen Fortsätze (72,101) für die Lamellen (1) hindurch führen, wobei der Abstand zwischen den Löchern (78) dem Abstand der Lamellen (1) bei geschlossenem Lamellenvorhang (35) entspricht.

35. Anordnung nach Anspruch 34, **dadurch gekennzeichnet, dass** das Band (77) als Abdeckband für den Schlitz (53) der Führungsschiene (47) dient.

## Claims

1. Elongated slat (1) for a slatted shade screen or a slatted blind (35) on a vehicle window (38) with a shape other than a rectangular,
with a first elongated slat part (7), which has a longitudinal extension that is larger than the transverse extension, of which one end (18) forms a first face end (6) of the slat (1) provided with a connection means (19),
with a second slat part (8), which is displaceably positively connected to the first slat part (7) and of which one end (14) forms a second face end (5) of the slat (1), wherein the direction of displacement lies parallel to the longitudinal extension of the first slat part (7), and
with a prestressing means (24), which is active between the two slat parts (7, 8) in order to apply a prestressing force between the two slat parts (7, 8) in a direction parallel to the longitudinal extension of the first slat part (7).

2. Slat according to Claim 1, **characterised in that** the first slat part (7) has an I-section in at least one portion of its length.

3. Slat according to Claim 1, **characterised in that** the connection means (19) has catch elements, which are fitted for a catch connection (19, 72).

4. Slat according to Claim 1, **characterised in that** the second slat part (8) essentially has the shape of a tube, in which the first slat part (7) is longitudinally displaceable in a telescope-type manner.

5. Slat according to Claim 1, **characterised in that** in its end (13) remote from the second face end (5) of the slat (1), the second slat part (8) has a contour in some sections, to which the outer contour of a section adjoining the first face end (6) of the slat (1) is matched.

6. Slat according to Claim 1, **characterised in that** at least one face end (5, 6) of the slat (1) is matched to the contour of the window (38) at the location, at which the respective slat (1) is positioned when the slatted shade screen (35) is closed.

7. Slat according to Claim 1, **characterised in that** the face end (5, 6) of the slat (1) is straight.

8. Slat according to Claim 1, **characterised in that** a face end (5, 6) of the slat (1) exhibits an at least approximately semicircular course in a view onto the flat side (2) of the slat (1).

9. Slat according to Claim 1, **characterised in that** the prestressing means (24) is housed inside the slat (1).

10. Slat according to Claim 1, **characterised in that** one of the slat parts (8) forms a cavity to house the prestressing means (24).

11. Slat according to Claim 10, **characterised in that** the cavity is formed by the second slat part (8).

12. Slat according to Claim 10, **characterised in that** the cavity is closed off by a cover (25) located in the longitudinal direction of the slat (1).

13. Slat according to Claim 12, **characterised in that** the cover (25) forms the second face end (5) of the slat (1).

14. Slat according to Claim 1, **characterised in that** the second slat part (8) consists of a tubular section and a cover (25) attached thereon.

15. Slat according to Claim 14, **characterised in that** the cover (25) is latched to the tubular section or integrally connected thereto.

16. Slat according to Claim 12 or 14, **characterised in that** the cover (25) has an abutment (29) for the prestressing means.

17. Slat according to Claim 1, **characterised in that** the first slat part (7) is provided with an abutment (23) for the prestressing means (24) on its end sitting in the second slat part (8).

18. Slat according to Claim 17, **characterised in that** the abutment is respectively formed from a pin (23, 29) sitting in holes.

19. Slat according to Claim 1, **characterised in that** the prestressing means (24) prestresses the slat (1) towards its shortest longitudinal extension.

20. Slat according to Claim 1, **characterised in that** the prestressing means (24) is formed by a rubber ring.

21. Slat according to Claim 12 or 14, **characterised in that** the cover (25) comprises a pocket-like opening, which is accessible from the outside via a keyhole-shaped opening (31).

22. Slat according to Claim 1, **characterised in that** the cross-section of the slat (1) has an ellipse-shaped form in a plane at right angles to the longitudinal extension of the slat (1).

23. Slat according to Claim 1, **characterised in that** the cross-section of the slat (1) tapers to a point at one end and is blunt at the other end, as viewed in a plane at right angles to the longitudinal extension of the slat (1).

24. Slat according to Claim 1, **characterised in that** the slat parts (7, 8) are made of plastic.

25. Slatted blind arrangement or slatted shade screen arrangement (35) for a vehicle window (38) with a shape other than rectangular, with two guide rails (46, 47) running next to one another,
with at least two slats (1), which are guided between the guide rails (46, 47) and which may be altered in length in a direction transverse to the guide rails (46,47),
with a drive means (56, 92, 104, 105), which is connected to at least one of the slats (1) in order to move the slat (1) along the guide rails (46, 47),
with a coupling means (77), which connects one slat (1) to one or both adjacent slats (1), and
with a rotating means (63, 106) to adjust the angle of the slats (1),
wherein the slats (1) are configured according to one or more of Claims 1 to 23.

26. Arrangement according to Claim 25, **characterised in that** running in each guide rail (46, 47) for each slat (1) is a slider (56, 92), which is provided with a peg-shaped extension (72, 101), which is fitted to engage into a corresponding opening (19, 31) in the slat (1).

27. Arrangement according to Claim 26, **characterised in that** the connection between the peg-shaped extension (72, 101) and the slat (1) is releasable.

28. Arrangement according to Claim 27, **characterised in that** one of the peg-shaped extensions (101) of each slat has a spherical head (103).

29. Arrangement according to Claim 27, **characterised in that** one of the peg-shaped extensions (72) of each slat has the shape of a hammer.

30. Arrangement according to Claim 26, **characterised in that** the sliders (56, 92) of one of the slats respectively contain a continuous threaded hole (75, 98), which projects over the clearance profile of the rest of the sliders (56, 92), as viewed in the longitudinal direction of the guide rails (46, 47).

31. Arrangement according to Claim 27, **characterised in that** the peg-shaped extension (72) of a group of sliders (56) is provided with an angular gear (63), of which a gear (64) contains a passage (68) with a polygonal profile, and that the passage (68) is oriented parallel to the path of movement of the slats (1) along the guide rails (46, 47).

32. Arrangement according to Claim 31, **characterised in that** a preferably pliant profile shaft (106), which runs through the gears (64) of the angular gear (63) with the passage (68) displaceably and in a manner fixed against rotation, runs in one of the guide rails (46, 47).

33. Arrangement according to Claim 30, **characterised in that** in both guide rails (46, 47) a preferably flexible threaded spindle (104, 105) respectively runs, and that each of the threaded spindles (104, 105) passes through the threaded holes (75, 98) of those sliders (56, 92), which cover the longest path during opening and closing of the slatted shade screen or blind (35).

34. Arrangement according to Claim 26, **characterised in that** coupling means (77) between the slats (1) is formed by at least one band, which is provided with equally spaced holes (78), through which the peg-shaped extensions (72, 101) for the slats (1) pass, wherein the distance between the holes (78) corresponds to the distance between the slats (1) when the slatted shade screen (35) is closed.

35. Arrangement according to Claim 34, **characterised in that** the band (77) serves as covering band for the slit (53) of the guide rail (47).

## Revendications

1. Lamelle (1) de forme allongée pour un rideau à lamelles ou un store à lamelles (35) sur une fenêtre (38) de véhicule présentant une forme différente de la forme rectangulaire,
• avec un premier élément de lamelle (7) allongé, qui présente une dimension longitudinale est supérieure à sa dimension transversale et dont une extrémité (18) forme une première extrémité frontale (6) de la lamelle (1) et est pourvue d'un dispositif de liaison (19),
• avec un deuxième élément de lamelle (8), qui est lié par complémentarité de formes et de manière coulissante au premier élément de lamelle (7), et dont une extrémité (14) forme une deuxième extrémité frontale (5) de la lamelle (1), la direction coulissement étant parallèle à la longueur du premier élément de lamelle (7), et
• avec un dispositif de précontrainte (24) qui agit entre les deux éléments de lamelle (7, 8) aux fins d'appliquer entre les deux éléments de lamelle (7, 8) une force de précontrainte dans une direction parallèle à la longueur du premier élément de lamelle (7).

2. Lamelle selon la revendication 1, **caractérisée par le fait que** le premier élément de lamelle (7), sur une portion au moins de sa longueur, présente un profil en I.

3. Lamelle selon la revendication 1, **caractérisée par le fait que** le dispositif de liaison (19) présente des organes d'encliquetage agencés pour une liaison par encliquetage (19, 72).

4. Lamelle selon la revendication 1, **caractérisée par le fait que** le deuxième élément de lamelle (8) a essentiellement la forme d'un tube, dans lequel le premier élément de lamelle (7) peut coulisser de manière télescopique.

5. Lamelle selon la revendication 1, **caractérisée par le fait que** le deuxième élément de lamelle (8), à son extrémité (13) éloignée de la deuxième extrémité frontale (5) de la lamelle, présente localement un contour auquel le contour extérieur d'une portion (1) voisine de la première extrémité frontale (6) de la lamelle (1) est adapté.

6. Lamelle selon la revendication 1, **caractérisée par le fait qu'**au moins une extrémité frontale (5, 6) de la lamelle (1) est adaptée au contour de la fenêtre (38), à l'emplacement où la lamelle (1) concernée se trouve lorsque le rideau à lamelles (35) est fermé.

7. Lamelle selon la revendication 1, **caractérisée par le fait qu'**une extrémité frontale (5, 6) de la lamelle (1) est droite.

8. Lamelle selon la revendication 1, **caractérisée par le fait qu'**une extrémité frontale (5, 6) de la lamelle (1), en vue sur le plat (2) de la lamelle (1), présente un tracé au moins sensiblement semi-circulaire.

9. Lamelle selon la revendication 1, **caractérisée par le fait que** le dispositif de précontrainte (24) est logé à l'intérieur de la lamelle (1).

10. Lamelle selon la revendication 1, **caractérisée par le fait que** l'un des éléments de lamelle (8) forme une cavité pour le logement du dispositif de précontrainte (24).

11. Lamelle selon la revendication 10, **caractérisée par le fait que** la cavité est formée par le deuxième élément de lamelle (8).

12. Lamelle selon la revendication 10, **caractérisée par le fait que** la cavité est fermée par un couvercle (25) disposé dans la direction longitudinale de la lamelle (1).

13. Lamelle selon la revendication 12, **caractérisée par le fait que** le couvercle (25) forme la deuxième extrémité frontale (5) de la lamelle (1).

14. Lamelle selon la revendication 1, **caractérisée par le fait que** le deuxième élément de lamelle (8) est formé d'un tronçon en forme de tube et d'un couvercle (25) placé sur celui-ci.

15. Lamelle selon la revendication 14, **caractérisée par le fait que** le couvercle (25) est encliqueté sur le tronçon en forme de tube ou est lié par matière à celui-ci.

16. Lamelle selon la revendication 12 ou 14, **caractérisée par le fait que** le couvercle (25) présente un contre-appui (29) pour le dispositif de précontrainte.

17. Lamelle selon la revendication 1, **caractérisée par le fait que** le premier élément de lamelle (7), à son extrémité qui pénètre dans le deuxième élément de lamelle (8), est pourvu d'un contre-appui (23) pour le dispositif de précontrainte (24).

18. Lamelle selon la revendication 17, **caractérisée par le fait que** le contre-appui est formé chaque fois d'une tige (23, 29) insérée dans des perçages.

19. Lamelle selon la revendication 1, **caractérisée par le fait que** le dispositif de précontrainte (24) précontraint la lamelle (1) dans la direction de sa longueur la plus courte.

20. Lamelle selon la revendication 1, **caractérisée par le fait que** le dispositif de précontrainte (24) est formé d'un anneau de caoutchouc.

21. Lamelle selon la revendication 12 ou 14, **caractérisée par le fait que** le couvercle (25) comporte une ouverture en forme de poche qui est accessible depuis l'extérieur via une ouverture (31) en forme de trou de serrure.

22. Lamelle selon la revendication 1, **caractérisée par le fait que** la section transversale de la lamelle (1) a une forme d'ellipse dans un plan perpendiculaire à la longueur de la lamelle (1).

23. Lamelle selon la revendication 1, **caractérisée par le fait que** la section transversale de la lamelle (1) à une extrémité se termine en pointe et est tronquée à l'autre extrémité, vu dans un plan perpendiculaire à la longueur de la lamelle (1).

24. Lamelle selon la revendication 1, **caractérisée par le fait que** les éléments de lamelle (7, 8)) sont en matière plastique.

25. Agencement de store à lamelles ou agencement de rideau à lamelles (35) pour une fenêtre (38) de véhicule, dont la forme diffère de la forme rectangulaire,
• avec deux rails de guidage (46, 47) qui s'étendent l'un à côté de l'autre,
• avec au moins deux lamelles (1) guidées entre les rails de guidage (46, 47), dont la longueur peut varier dans la direction transversale aux rails de guidage (46, 47),
• avec un dispositif d'entraînement (56, 92, 104, 105) qui est lié à au moins une des lamelles (1), aux fins de déplacer la lamelle (1) le long des rails de guidage (46, 47),
• avec un dispositif de couplage (77) qui relie une lamelle (1) à une ou aux deux lamelles (1) voisines, et
• avec un dispositif de rotation (63, 106) pour régler angulairement les lamelles (1),
• les lamelles (1) étant réalisées conformément à une ou plusieurs des revendications 1 à 23.

26. Agencement selon la revendication 25, **caractérisée par le fait que** dans chaque rail de guidage (46, 47), pour chaque lamelle (1) coulisse un coulisseau (56, 92) pourvu d'une saillie (72, 101) en forme de tenon destinée à pénétrer dans une ouverture (19, 31) correspondante dans la lamelle (1).

27. Agencement selon la revendication 26, **caractérisée par le fait que** la liaison entre la saillie (72, 101) en forme de tenon et la lamelle (1) est séparable.

28. Agencement selon la revendication 27, **caractérisée par le fait que** l'une des saillies (101) en forme de tenon de chaque lamelle a une tête (103) sphérique.

29. Agencement selon la revendication 27, **caractérisée par le fait que** l'une des saillies (72) en forme de tenon de chaque lamelle a la forme d'un marteau.

30. Agencement selon la revendication 26, **caractérisé par le fait que** les coulisseaux (56, 92) de l'une des lamelles comportent chaque fois un trou fileté (75, 98) débouchant qui est disposé en porte-à-faux par rapport au gabarit des autres coulisseaux (56, 92), vu dans la direction longitudinale des rails de guidage (46, 47).

31. Agencement selon la revendication 27, **caractérisé par le fait que** la saillie (72) en forme de tenon d'un groupe de coulisseaux (56) est pourvue d'un renvoi d'angle (63), dans lequel un pignon (64) comporte une ouverture débouchante (68) avec un profil polygonal et **par le fait que** l'ouverture débouchante (68) est orientée parallèlement à la course de déplacement des lamelles (1) le long des rails de guidage (46, 47).

32. Agencement selon la revendication 31, **caractérisé par le fait qu'**à l'intérieur de l'un des rails de guidage (46, 47) s'étend un arbre profilé (106), de préférence flexible, qui est fixe en rotation et s'étend de manière coulissante au travers des pignons (64) des renvois d'angle (63) pourvus du trou débouchant (68).

33. Agencement selon la revendication 30, **caractérisé par le fait qu'**à l'intérieur des deux rails de guidage (46, 47) s'étend chaque fois une broche filetée (104, 105), de préférence flexible, et que chaque broche filetée (104, 105) s'étend à travers les trous filetés (75, 98) des coulisseaux (56, 92) qui,lors de l'ouverture ou de la fermeture du rideau à lamelles ou du store à lamelles (35), parcourent le chemin le plus long.

34. Système selon la revendication 26, **caractérisé par le fait que** le dispositif de couplage (77) entre les lamelles (1) est formé d'au moins une bande (78) pourvue de trous (78) équidistants, dans lesquels s'engagent les saillies (732, 101) en forme de tenon des lamelles (1), la distance entre les trous (78) correspondant à la distance des lamelles (1) lorsque le rideau à lamelles (35) est fermé.

35. Dispositif selon la revendication 34, **caractérisé par le fait que** la bande (77) sert de bande de fermeture de la fente (53) du rail de guidage (47).
